# EUROPEAN PATENT SPECIFICATION

(11) **EP 2 797 266 B1**
(45) Date of publication and mention of the grant of the patent: **29.08.2018**
(21) Application number: 12860499.8
(22) Date of filing: 18.09.2012
(51) Int. Cl.: H04L 12/437, H04L 12/841, H04L 12/723

(54) **METHOD AND SYSTEM FOR SUPPRESSING SERVICE PACKET STORM DURING RING NETWORK PROTECTION**
VERFAHREN UND SYSTEM ZUR UNTERDRÜCKUNG EINES DIENSTPAKETSTURMS WÄHREND DES RINGNETZWERKSCHUTZES
PROCÉDÉ ET SYSTÈME POUR SUPPRIMER UNE TEMPÊTE DE PAQUETS DE SERVICE DURANT UNE PROTECTION DE RÉSEAU EN ANNEAU

(30) Priority: 21.12.2011 CN 201110433020
(43) Date of publication of application: 29.10.2014
(73) Proprietor: ZTE Corporation, Shenzhen, Guangdong 518057 (CN)
(72) Inventor: MA, Yuxia, Shenzhen Guangdong 518057 (CN); QU, Yanfeng, Shenzhen Guangdong 518057 (CN)
(74) Representative: Gevers Patents
(86) International application number: PCT/CN2012/081558
(87) International publication number: WO 2013/091408

(56) References cited:
- EP-A2- 1 528 731
- WO-A2-02/093999
- CN-A- 1 618 025
- CN-A- 101 189 837
- CN-A- 101 431 459
- US-A1- 2003 147 345
- ROSEN CISCO SYSTEMS E ET AL: "Multiprotocol Label Switching Architecture; rfc3031.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 January 2001 (2001-01-01), XP015008814, ISSN: 0000-0003
- "Ethernet ring protection switching; G.8032/Y.1344 (03/10)", ITU-T STANDARD, INTERNATIONAL TELECOMMUNICATION UNION, GENEVA ; CH, no. G.8032/Y.1344 (03/10), 9 March 2010 (2010-03-09), pages 1-98, XP017467412, [retrieved on 2010-08-27]

## Description

### TECHNICAL FIELD

The disclosure relates to ring protection technology, and more particularly to a method and a system for suppressing a service traffic storm during ring protection.

### BACKGROUND

To overcome the defects of high configuration workload and poor switch performance existing in a ring protection scheme in G.8132, ring protection schemes based on shared channels are proposed, which include a wrapping ring protection scheme based on shared channels and a steering ring protection scheme based on shared channels.

EP-A-1528731 discloses a method for protecting packets of MPLS traffic in networks comprising traffic nodes arranged in a ring-like configuration, and the method comprises providing the following steps in case a section extending between two nodes in said ring becomes faulty: at one edge node bordering the faulty section, redirecting the MPLS traffic in the opposite direction in the ring, via a protection path, at each particular node along said protection path, checking each specific packet belonging to the redirected MPLS traffic to determine whether the particular node is its egress point in the ring; if in the affirmative, allowing egress of the specific packet of the redirected M PLS traffic from the protection path at said particular node, if in the negative, forwarding the specific packet of the redirected MPLS traffic to a node following said particular node in the ring.

The document entitled "Multiprotocol Label Switching Architecture; rfc3031.txt" specifies an Internet standards track protocol for the Internet community.
The document entitled "Ethernet ring protection switching; G.8032N.1344 (03/10)" defines the automatic protection switching (APS) protocol and protection switching mechanisms for ETH Layer Ethernet ring topologies, including the details pertaining to Ethernet ring protection characteristics, architectures and the ring APS protocol.

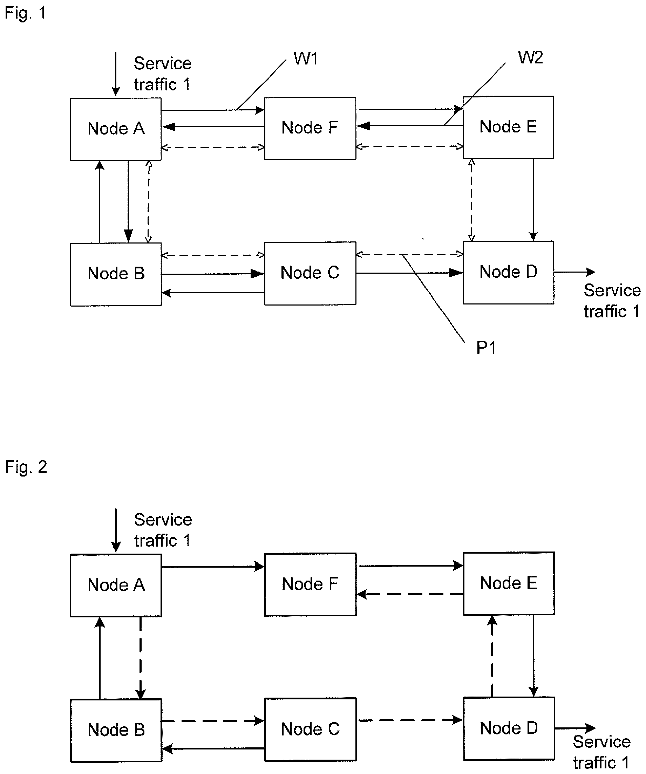

According to the wrapping ring protection scheme based on shared channels, a plurality of Multipoint-To-Point (MP2P) shared paths are established on a ring and service traffic which enters the ring from one or more nodes on the ring and leaves the ring from the same node may be carried on one shared path. When a network is normal, all clockwise or counterclockwise service traffic leaving the ring from the same node share a same clockwise or counterclockwise working channel. Meanwhile, an annular protection channel is established for working channels having the same destination node. The annular protection channel may be a one-way or two-way channel, depending upon the direction of the service traffic to be protected. Fig. 1 is a schematic diagram illustrating the configuration of a two-way working path and a protection path in wrapping ring protection based on shared channels. As shown in Fig. 1, each two adjacent nodes are connected to establish a clockwise working channel W1 and a counterclockwise working channel W2 to the destination node D, and an annular protection channel P1. Service traffic to the destination node D may be selectively carried on the working channel W1 or W2. When a failure occurs on the network, protection switch is implemented between nodes adjacent to the failure so that the clockwise working channel and the counterclockwise working channel are protected by the protection channel P1, that is, all clockwise and counterclockwise service traffic leaving the ring from the same node are protected by the same annular protection channel.

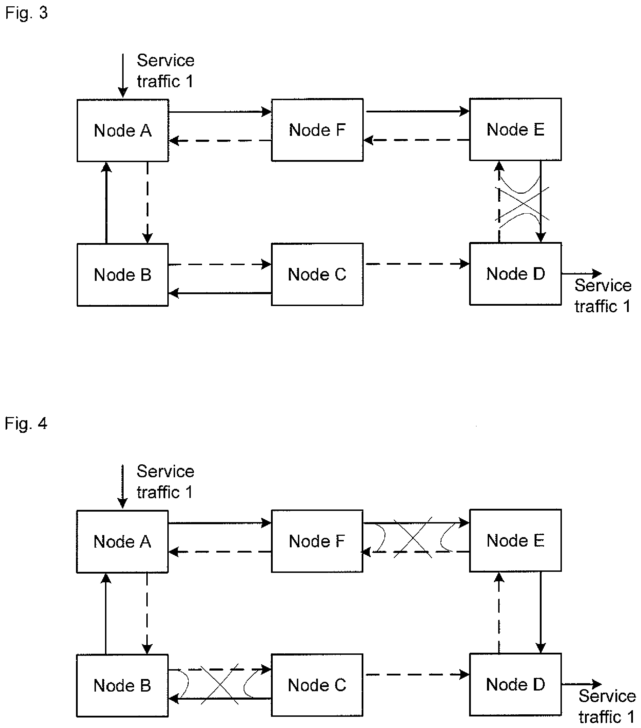

The wrapping ring protection scheme based on shared channels is applicable to both one-way service traffic and two-way service traffic. Here, for the convenience of explanation, a kind of one-way service traffic is illustrated as an example. As shown in Fig. 2, when a network is normal, service traffic 1 enters a ring from node A and is transmitted in the ring along a direction A-F-E-D. As shown in Fig. 3, when a single failure occurs on the network, that is, a failure occurs on the link between node E and node D, service traffic 1 is transmitted along a direction A-F-E-F-A-B-C-D. As shown in Fig. 4, when a plurality of failures occur on the network, that is, a failure occurs on the link between node F and node E and a failure also occurs on the link between node B and node C, a phenomenon that the service traffic is looped in the ring may occur, that is, service traffic 1 is cyclically transmitted along a direction of A-F-A-B-A-F..., which leads to the waste of ring bandwidth. Here, the phenomenon that the service traffic is looped in the ring may be referred to as a service traffic storm.

To this end, a Time To Live (TTL) value is set for a shared channel in the wrapping ring protection scheme based on shared channel, so as to prevent the service traffic storm. A maximum TTL value of the shared channel is 255 by default. That is, when service traffic is looped in a ring due to a plurality of failures occurring on a network, a packet of the service traffic is not discarded unless transmitted 255 times, which leads to the waste of ring bandwidth.

### SUMMARY

In view of this, the disclosure provides a method and a system for suppressing a service traffic storm during ring protection, which are capable of quickly reducing the transmission time of service traffic in a ring and effectively suppressing the service traffic storm when a plurality of failures occur on a network.

To this end, a technical solution of the disclosure is implemented as follows. The invention is carried out according to the appended independent claims. Optional features of the invention are carried out according to the dependent claims. In the above solution, the number of the receiving nodes may be two or more.

In the method and the system for suppressing a service traffic storm during ring protection provided by the disclosure, a clockwise MP2P shared working channel and/or a counterclockwise MP2P shared working channel are established for each destination node forming a ring network, and an annular protection channel is established for the MP2P shared working channel(s); a TTL value is set for each node in the ring network except for the destination node according to the MP2P shared working channel; when a failure occurs on the ring network, the ingress node transmits service traffic and the set TTL value to a receiving node when transmitting the service traffic; and the receiving node subtracts one from the received TTL value and transmits the resulting TTL value and the received service traffic to a next receiving node, and so on until a receiving node discards the service traffic after the receiving node finds that the received TTL value is one and determines that the received service traffic still needs to be transmitted to a next receiving node. In this way, the method and the system of the disclosure may quickly reduce the transmission time of service traffic in a ring and effectively suppress the service traffic storm when a plurality of failures occur on a network and therefore reduce the occupation of bandwidth.

### BRIEF DESCRIPTION OF THE DRAWINGS

Fig. 1 is a schematic diagram illustrating the configuration of a two-way working channel and a protection channel in wrapping ring protection based on shared channels; Fig. 2 is a schematic diagram illustrating the configuration of a one-way working channel and a protection channel in wrapping ring protection based on shared channels;
Fig. 3 is a schematic diagram illustrating the protection provided when a single failure occurs on the ring network shown in Fig. 2;
Fig. 4 is a schematic diagram illustrating the protection provided when a plurality of failures occur on the ring network shown in Fig. 2;
Fig. 5 is a flowchart illustrating a method for suppressing a service traffic storm during ring protection according to the disclosure;
Fig. 6 is a schematic diagram illustrating the configuration of a one-way working channel and a protection channel in wrapping ring protection based on shared channels according to an embodiment of the disclosure;
Fig. 7 is a schematic diagram illustrating the protection provided when a plurality of failures occur on a ring network according to an embodiment of the disclosure; and
Fig. 8 is a schematic diagram illustrating the structure of a system for suppressing a service traffic storm during ring protection according to the disclosure.

### DETAILED DESCRIPTION

The disclosure is further elaborated below in combination with the drawings and specific embodiments.

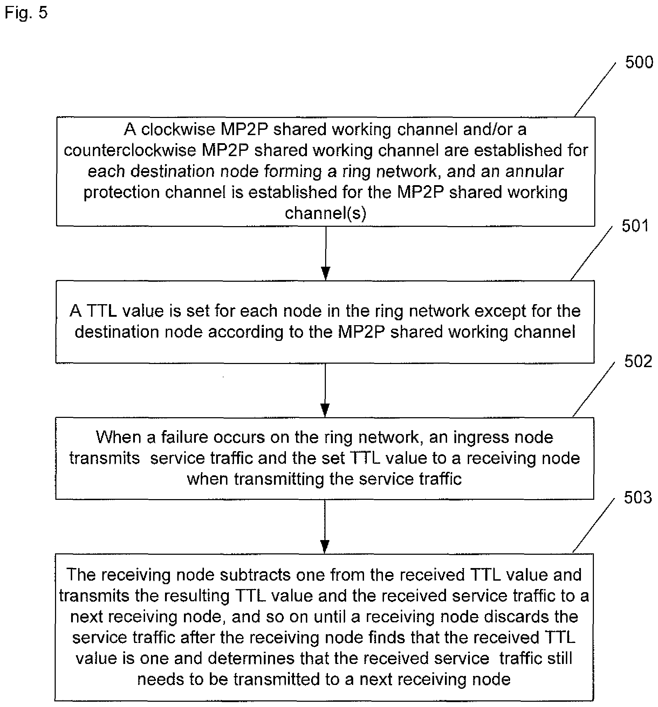

As shown in Fig. 5, a method for suppressing a service traffic storm during ring protection disclosed herein includes the following steps:
Step 500: A clockwise MP2P shared working channel and/or a counterclockwise MP2P shared working channel are established for each destination node forming a ring network(s), and an annular protection channel is established for the MP2P shared working channel. Then, Step 501 is executed.

Here, service traffic entering the ring network from any other ingress node in the ring network may be carried on the MP2P shared working channel.

This step may be implemented by using existing technology, that is, the specific process of this step is the same as that of the existing wrapping ring protection scheme based on shared channels, and is not repeated here.

Step 501: A TTL value is set for each node in the ring network except for the destination node according to the MP2P shared working channel.

Here, the process that a TTL value is set for each node in the ring network except for the destination node according to the MP2P shared working channel specifically includes that:
according to the direction of the established clockwise or counterclockwise MP2P shared working channel, the TTL value of the first node of nodes forming the MP2P shared working channel is set to be 2N-2, the TTL value of the second node of the nodes forming the MP2P shared working channel is set to be 2N-3, and so on until the TTL value of the last but one node of the nodes forming the MP2P shared working channel is set to be N.

If the established MP2P shared working channel includes a clockwise MP2P shared working channel and a counterclockwise MP2P shared working channel, then the direction of the clockwise MP2P shared working channel or the counterclockwise MP2P shared working channel may be selected as the basis for setting the TTL value, as needed.

The range of the set TTL value is from N to 2N-2, where N denotes the number of the nodes forming the ring network.

Here, when the ring network is normal, the maximum TTL value needed for the service traffic to reach at the destination node is N.

When a single failure occurs on the ring network, that is, one failure occurs, based on the example shown in Fig. 3, the following three cases are analyzed:
1) If the service traffic enters the ring network from node E, then the transmission path of the service traffic is E-F-A-B-C-D, and each receiving node subtracts one from the TTL value after receiving the service traffic. Thus, the requirement of the service traffic on the reach at the destination node may be met as long as the TTL value is set to be N.
2) If the service traffic enters the ring network from node C, the transmission path of the service traffic is C-B-A-F-E-F-A-B-C-D. It can be seen that the service traffic, when being transmitted, passes each node two times at most, and passes a failure-associated node once, that is, the service traffic only passes node E and D once. Thus, the requirement of the service traffic on the reach at the destination node may be met as long as the maximum TTL value is set to be 2N-2.
3) If the service traffic enters the ring network from another node such as node A or B, then the TTL value needed for the service traffic to reach at the destination node is from N to 2N-2.

Since the TTL value needed for the service traffic to reach at the destination node is maximum when a single failure occurs on the ring network, the TTL value needed for the reach of the service at the destination node when two or more failures occur on the ring network is not greater than the TTL value needed in the case of the occurrence of a single failure.

Thus, the range of the set TTL value is from N to 2N-2.

In an actual application, when there are pluralities of destination nodes on a formed ring network, it is needed to set, for each destination node, a TTL value for each node in the ring network except for the destination node. For example, as shown in Fig. 2, if it is assumed that node A and D are both destination nodes, a TTL value is set for all other nodes forming the ring network except for the destination node D when the node D is taken as a destination node, while a TTL value is set for all other nodes forming the ring network except for the destination node A when node A is taken as a destination node.

Steps 502-503: When a failure occurs on the ring network, the ingress node transmits service traffic and the set TTL value to a receiving node when transmitting the service traffic; and the receiving node subtracts one from the received TTL value and transmits the resulting TTL value and the received service traffic to a next receiving node, and so on until a receiving node discards the service traffic after the receiving node finds that the received TTL value is one and determines that the received service traffic still needs to be transmitted to a next receiving node.

Here, the occurrence of two or more failures on a ring refers to the occurrence of failures at a plurality of points on a network, that is, the number of the failures is two or more.

The receiving node refers to a node which is located between the ingress node and the destination node and takes charge of forwarding service traffic.

It should be noted here that when the network is normal, each node will still carry out the operation of subtracting one from the received TTL value during the transmission process of the service traffic. However, for the normal network, the service traffic will be transmitted along a working path, that is, it will not happen that the TTL value received by a receiving node is one and the service traffic received by the receiving node still needs to be transmitted to the next receiving node, that is, the service traffic will not be discarded.

The disclosure is further elaborated below in combination with an embodiment.

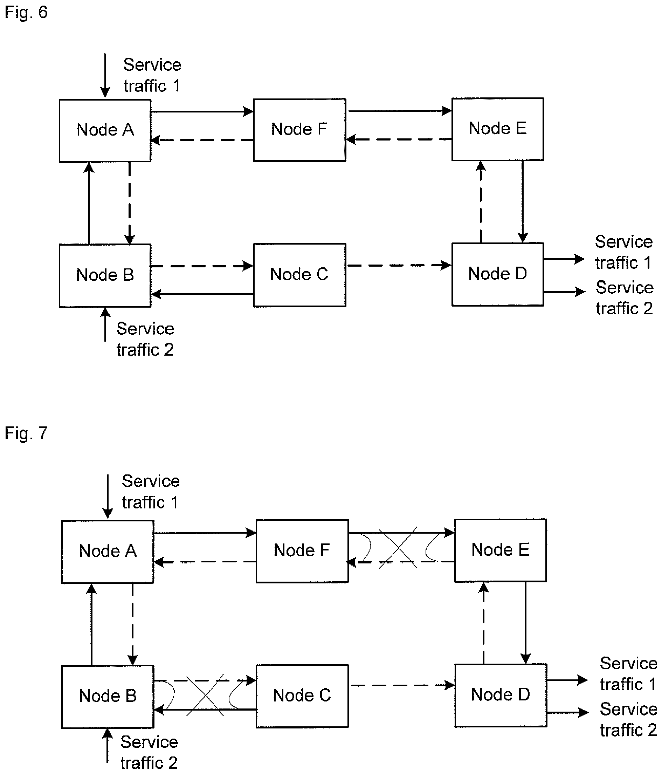

The application scenario of the embodiment is as follows: nodes A, B, C, D, E and F form a ring network, as shown in Fig. 6, an established shared working channel is the channel consisting of the solid lines shown in Fig. 2, that is, the established shared working channel is C-B-A-F-E-D, and an established shared protection channel is the channel consisting of the dotted lines shown in Fig. 2, that is, the established annular protection channel is A-B-C-D-E-F-A. Service traffic 1 enters the ring from node A, that is, node A is the ingress node of service traffic 1, and the destination node corresponding to service traffic 1 is node D. Service traffic 2 enters the ring from node B, that is, node B is the ingress node of service traffic 2, and the destination node corresponding to service traffic 2 is node D. Since the number of nodes forming the ring network is 6, the TTL value of each node in the shared working channel may be, for example, configured as follows: the TTL value of node C is 10, the TTL value of node B is 9, the TTL value of node A is 8, the TTL value of node F is 7, and the TTL value of node E is 6.

As shown in Fig. 7, two failures occur on the ring, that is, a failure occurs on the link between node F and node E and a failure occurs on the link between node B and node C. After entering the ring from node A, service traffic 1 is cyclically transmitted along a path A-F-A-B-A. Since the TTL value of node A is 8, the service traffic of the service traffic 1 is discarded when the TTL is reduced to 0 after the service traffic is transmitted 8 times.

Correspondingly, after entering the ring from node B, the service traffic of service traffic 2 is cyclically transmitted along a path B-A-F-A-B. Since the TTL value of node B is 9, the service traffic of service traffic 2 is discarded when the TTL is reduced to 0 after the service traffic is transmitted 9 times.

When the failures are repaired, the service traffic of services service traffic 1 and 2 are both re-transmitted along a normal path. Thus, the TTL values have no influence on the transmission of the service traffic, and are adequate for the service traffic to reach at node D.

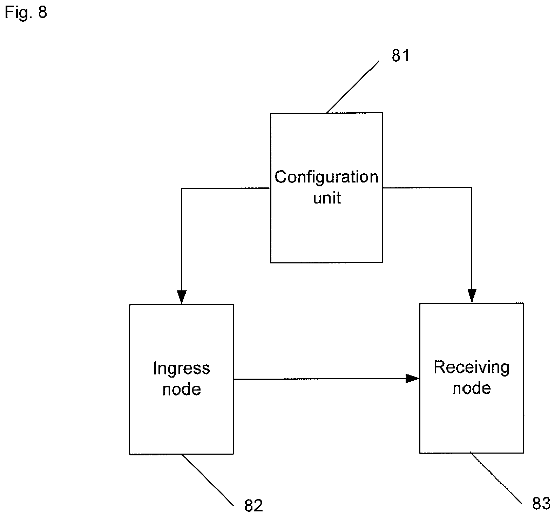

To implement the foregoing method, the disclosure also provides a system for suppressing a service traffic storm during ring protection. As shown in Fig. 8, the system includes: a configuration unit 81, an ingress node 82 and receiving nodes 83.

The configuration unit 81 is configured to: for each destination node forming a ring network, establish a clockwise MP2P shared working channel and/or a counterclockwise MP2P shared working channel, and establish an annular protection channel for the MP2P shared working channel(s); and set a TTL value for each node in the ring network except for the destination nodes according to the MP2P shared working channel.

The ingress node 82 is configured to, when a failure occurs on the ring network, transmit service traffic and the set TTL value to a receiving node 83 when transmitting the service traffic.

Each receiving node 83 is configured to: after the service traffic and the TTL value are received, subtract one from the received TTL value and transmit the resulting TTL value and the received service traffic to a next receiving node; and when the receiving node finds that the received TTL value is one and the receiving node determines that the received service traffic still needs to be transmitted to a next receiving node, discard the service traffic.

Here, the receiving node refers to a node which is located between the ingress node and the destination node and takes charge of forwarding the service traffic.

The number of the receiving nodes is two or more.

When a TTL value is set, the configuration unit 81 is specifically configure to:
according to a direction of the established clockwise or counterclockwise MP2P shared working channel, set a TTL value of a first node of nodes forming the MP2P shared working channel to be 2N-2, set a TTL value of a second node of the nodes forming the MP2P shared working channel to be 2N-3, and so on until set a TTL value of a last but one node of the nodes forming the MP2P shared working channel to be N.

The above are merely the preferred embodiments of the disclosure, but are not intended to limit the scope of protection of the claims of the disclosure.

## Claims

1. A method for suppressing a service traffic storm during ring protection, which comprises: for each destination node forming a ring network, establishing (500) a clockwise Multipoint-To-Point,MP2P, shared working channel and/or a counterclockwise MP2P shared working channel, and establishing (500) an annular protection channel for the MP2P shared working channel(s), wherein the method further comprises:
Step A: setting (501) a Time to Live ,TTL, value for each node in the ring network except for the destination node according to the MP2P shared working channel, a range of the set TTL value being from N to 2N-2, where N denotes a number of nodes forming the ring network;
Step B: when two or more wrappings occur on the ring network, transmitting (502), by an ingress node, service traffic and the set TTL value to a receiving node when transmitting the service traffic;
Step C: determining, by the receiving node, whether the received TTL value is one;
Step D: when the received TTL value is not one, subtracting (503), by the receiving node, one from the received TTL value and transmitting the resulting TTL value and the received service traffic to a next receiving node; and then executing Step C by the next receiving node substituting for the receiving node; and
Step E: when the received TTL value is one, discarding (503), by the receiving node, the received service traffic when the receiving node further determines that the received service traffic needs to be transmitted to a next receiving node;
wherein step A comprises:
according to a direction of the established clockwise or counterclockwise MP2P shared working channel, setting a TTL value of a k-th node of nodes forming the MP2P shared working channel to be (2N-1)-k, wherein k=1, 2, ..., N-1.

2. A system for suppressing a service traffic storm during ring protection, comprising: a configuration unit (81) configured to, for each destination node forming a ring network, establish a clockwise Multipoint-To-Point ,MP2P, shared working channel and/or a counterclockwise MP2P shared working channel, and establish an annular protection channel for the MP2P shared working channel(s), wherein the system further comprises an ingress node (82) and receiving nodes (83),
the configuration unit (81) is further configured to set a Time to Live ,TTL, value for each node in the ring network except for the destination nodes according to the MP2P shared working channel, a range of the set TTL value being from N to 2N-2, where N denotes a number of nodes forming the ring network;
the ingress node (82) is configured to, when two or more wrappings occur on the ring network, transmit service traffic and the set TTL value to a receiving node when transmitting the service traffic; and
each receiving node (83) is configured to: after the service traffic and the TTL value are received, determine whether the received TTL value is one; when the received TTL value is not one, subtract one from the received TTL value and transmitting the resulting TTL value and the received service traffic to a next receiving node; and when the received TTL value is one, discard the received service traffic when it is further determined that the received service traffic needs to be transmitted to a next receiving node;
wherein the configuration unit (81) is configured to: when a TTL value is set, according to a direction of the established clockwise or counterclockwise MP2P shared working channel, set a TTL value of a k-th node of nodes forming the MP2P shared working channel to be (2N-1)-k, wherein k=1, 2, ..., N-1, and N is the number of the nodes forming the ring network.

3. The system according to claim 2, wherein a number of the receiving nodes is two or more.

## Patentansprüche

1. Verfahren zum Unterdrücken eines Dienstverkehrsandrangs während eines Ringschutzes, umfassend: für jeden Zielknoten, der ein Ringnetz bildet, Erstellen (500) eines Mehrpunkt-zu-Punkt-Gemeinschaftsarbeitskanals, MP2P, Gemeinschaftsarbeitskanals, im Uhrzeigersinn und/oder eines MP2P-Gemeinschaftsarbeitskanals im Gegenuhrzeigersinn und Erstellen (500) eines ringförmigen Schutzkanals für den oder die MP2P-Gemeinschaftsarbeitskanäle, wobei das Verfahren ferner Folgendes umfasst:
Schritt A: Einstellen (501) eines Lebenszeit-Wertes, TTL-Wertes, für jeden Knoten in dem Ringnetz außer dem Zielknoten gemäß dem MP2P-Gemeinschaftsarbeitskanal, wobei ein Bereich des eingestellten TTL-Wertes von N bis 2N-2 reicht, wobei N eine Anzahl von Knoten bezeichnet, die das Ringnetz bilden;
Schritt B: wenn zwei oder mehrere Umläufe in dem Ringnetz erfolgen, Senden (502), durch einen Eintrittsknoten, des Dienstverkehrs und des eingestellten TTL-Wertes an einen Empfangsknoten, wenn der Dienstverkehr gesendet wird;
Schritt C: Bestimmen durch den Empfangsknoten, ob der empfangene TTL-Wert gleich eins ist;
Schritt D: wenn der empfangene TTL-Wert nicht gleich eins ist, Subtrahieren (503), durch den Empfangsknoten, von eins von dem empfangenen TTL-Wert und Senden des sich ergebenden TTL-Wertes und des empfangenen Dienstverkehrs an einen nächsten Empfangsknoten; und dann Ausführen von Schritt C durch den nächsten Empfangsknoten, der den Empfangsknoten ersetzt; und
Schritt E: wenn der empfangene TTL-Wert gleich eins ist, Verwerfen (503) durch den Empfangsknoten des empfangenen Dienstverkehrs, wenn der Empfangsknoten ferner bestimmt, dass der empfangene Dienstverkehr an einen nächsten Empfangsknoten gesendet werden muss;
wobei Schritt A Folgendes umfasst:
gemäß einer Richtung des erstellten MP2P-Gemeinschaftsarbeitskanals im Uhrzeigersinn oder im Gegenuhrzeigersinn, Einstellen eines TTL-Wertes eines k-Teil Knotens der Knoten, die den MP2P-Gemeinschaftsarbeitskanal bilden, damit er gleich (2N-1)-k ist, wobei k=1, 2, ..., N-1.

2. System zum Unterdrücken eines Dienstverkehrsandrangs während eines Ringschutzes, umfassend: eine Konfigurationseinheit (81), die konfiguriert ist, um für jeden Zielknoten, der ein Ringnetz bildet, einen Mehrpunkt-zu-Punkt-, MP2P, Gemeinschaftsarbeitskanal im Uhrzeigersinn und/oder einen MP2P-Gemeinschaftsarbeitskanal im Gegenuhrzeigersinn zu erstellen, und einen ringförmigen Schutzkanal für den oder die MP2P-Gemeinschaftsarbeitskanäle zu erstellen, wobei das System ferner einen Eintrittsknoten (82) und Empfangsknoten (83) umfasst,
die Konfigurationseinheit (81) ferner konfiguriert ist, um einen Lebenszeit-, TTL, Wert für jeden Knoten in dem Ringnetz außer dem Zielknoten gemäß dem MP2P-Gemeinschaftsarbeitskanal einzustellen, wobei ein Bereich des eingestellten TTL-Wertes von N bis 2N-2 reicht, wobei N eine Anzahl von Knoten bezeichnet, die das Ringnetz bilden;
der Eintrittsknoten (82) konfiguriert ist, wenn zwei oder mehrere Umläufe in dem Ringnetz vorkommen, um den Dienstverkehr und den eingestellten TTL-Wert an einen Empfangsknoten zu senden, wenn der Dienstverkehr gesendet wird; und
jeder Empfangsknoten (83) konfiguriert ist zum: nachdem der Dienstverkehr und der TTL-Wert empfangen wurden, Bestimmen, ob der empfangene TTL-Wert gleich eins ist; wenn der empfangene TTL-Wert nicht gleich eins ist, Subtrahieren von eins von dem empfangenen TTL-Wert und Senden des sich ergebenden TTL-Wertes und des empfangenen Dienstverkehrs an einen nächsten Empfangsknoten; und wenn der empfangene TTL-Wert gleich eins ist, Verwerfen des empfangenen Dienstverkehrs, wenn ferner bestimmt wird, dass der empfangene Dienstverkehr an einen nächsten Empfangsknoten gesendet werden muss;
wobei die Konfigurationseinheit (81) konfiguriert ist zum: wenn ein TTL-Wert eingestellt ist, gemäß einer Richtung des erstellten MP2P-Gemeinschaftskanals im Uhrzeigersinn oder im Gegenuhrzeigersinn, Einstellen eines TTL-Wertes eines k-Teil. Knotens der Knoten, die den MP2P-Gemeinschaftskanal bilden, damit er gleich (2N-1)-k ist, wobei k=1, 2, ..., N-1, und N die Anzahl der Knoten ist, die das Ringnetz bilden.

3. System nach Anspruch 2, wobei eine Anzahl der Empfangsknoten gleich zwei oder mehr ist.

## Revendications

1. Procédé pour supprimer une tempête de trafic de service durant la protection en anneau, qui comprend : pour chaque noeud de destination formant un réseau en anneau, l'établissement (500) d'un canal de travail partagé multipoint à point, MP2P, dans le sens des aiguilles d'une montre et/ou d'un canal de travail partagé MP2P dans le sens inverse des aiguilles d'une montre, et l'établissement (500) d'un canal de protection annulaire pour le canal ou les canaux de travail partagé(s) MP2P, dans lequel le procédé comprend en outre :
Étape A : le réglage (501) d'une valeur de durée de vie, TTL, pour chaque noeud dans le réseau en anneau à l'exception du noeud de destination selon le canal de travail partagé MP2P, une plage de la valeur de TTL réglée étant de N à 2N-2, où N indique un nombre de noeuds formant le réseau en anneau ;
Étape B : lorsque deux ou plus bouclages se produisent sur le réseau en anneau, la transmission (502), par un noeud d'entrée, d'un trafic de service et de la valeur de TTL réglée à un noeud de réception lors de la transmission du trafic de service ;
Étape C : la détermination, par le noeud de réception, que la valeur de TTL reçue est un ;
Étape D : lorsque la valeur de TTL reçue n'est pas un, la soustraction (503), par le noeud de réception, d'un de la valeur de TTL reçue et la transmission de la valeur de TTL résultante et du trafic de service reçu à un noeud de réception suivant ; et puis l'exécution de l'étape C par le noeud de réception suivant la substitution au noeud de réception ; et
Étape E : lorsque la valeur de TTL reçue est un, le rejet (503), par le noeud de réception, du trafic de service reçu lorsque le noeud de réception détermine en outre que le trafic de service reçu doit être transmis à un noeud de réception suivant ;
dans lequel l'étape A comprend :
selon une direction du canal établi de travail partagé MP2P dans le sens des aiguilles d'une montre ou dans le sens inverse des aiguilles d'une montre, le réglage d'une valeur de TTL d'un k-ième noeud de noeuds formant le canal de travail partagé MP2P à (2N-1)-k, dans lequel k=1, 2, ..., N-1.

2. Système pour supprimer une tempête de trafic de service durant la protection en anneau, comprenant : une unité de configuration (81) configurée pour, pour chaque noeud de destination formant un réseau en anneau, établir un canal de travail partagé multipoint à point, MP2P, dans le sens des aiguilles d'une montre et/ou un canal de travail partagé MP2P dans le sens inverse des aiguilles d'une montre, et établir un canal de protection annulaire pour le canal ou les canaux de travail partagé(s) MP2P, dans lequel le système comprend en outre un noeud d'entrée (82) et des noeuds de réception (83),
l'unité de configuration (81) est en outre configurée pour régler une valeur de durée de vie, TTL, pour chaque noeud dans le réseau en anneau à l'exception des noeuds de destination selon le canal de travail partagé MP2P, une plage de la valeur de TTL réglée étant de N à 2N-2, où N indique un nombre de noeuds formant le réseau en anneau ;
le noeud d'entrée (82) est configuré pour, lorsque deux ou plus bouclages se produisent sur le réseau en anneau, transmettre un trafic de service et la valeur de TTL réglée à un noeud de réception lors de la transmission du trafic de service ; et
chaque noeud de réception (83) est configuré pour : après que le trafic de service et la valeur de TTL sont reçus, déterminer que la valeur de TTL reçue est un ; lorsque la valeur de TTL reçue n'est pas un, soustraire un de la valeur de TTL reçue et transmettre la valeur de TTL résultante et le trafic de service reçu à un noeud de réception suivant ; et lorsque la valeur de TTL reçue est un, rejeter le trafic de service reçu lorsqu'il est en outre déterminé que le trafic de service reçu doit être transmis à un noeud de réception suivant ;
dans lequel l'unité de configuration (81) est configurée pour : lorsqu'une valeur de TTL est réglée, selon une direction du canal établi de travail partagé MP2P dans le sens des aiguilles d'une montre ou dans le sens inverse des aiguilles d'une montre, régler une valeur de TTL d'un k-ième noeud de noeuds formant le canal de travail partagé MP2P à (2N-1)-k, dans lequel k=1, 2, ..., N-1, et N est le nombre des noeuds formant le réseau en anneau.

3. Système selon la revendication 2, dans lequel un nombre des noeuds de réception est deux ou plus.
